(19) Europäisches Patentamt
European Patent Office
Office européen des brevets

(11) **EP 3 180 625 B1**

(12) **EUROPÄISCHE PATENTSCHRIFT**

(45) Veröffentlichungstag und Bekanntmachung des Hinweises auf die Patenterteilung:
**17.06.2020   Patentblatt 2020/25**

(51) Int Cl.:
***G01P 3/489*** *(2006.01)*   ***G01D 5/245*** *(2006.01)*
***G01P 3/44*** *(2006.01)*

(21) Anmeldenummer: **15744583.4**

(22) Anmeldetag: **30.07.2015**

(86) Internationale Anmeldenummer:
**PCT/EP2015/067606**

(87) Internationale Veröffentlichungsnummer:
**WO 2016/023769 (18.02.2016 Gazette 2016/07)**

(54) **AUFLÖSUNGSERHÖHUNG IM DREHZAHLSIGNAL ZWISCHEN DREHZAHLPULSEN**

RESOLUTION INCREASE IN THE ROTATIONAL SPEED SIGNAL BETWEEN ROTATIONAL SPEED PULSES

AUGMENTATION DE RÉSOLUTION DANS LE SIGNAL DE VITESSE DE ROTATION ENTRE DES IMPULSIONS DE VITESSE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2014   DE 102014216295**

(43) Veröffentlichungstag der Anmeldung:
**21.06.2017   Patentblatt 2017/25**

(73) Patentinhaber: **Continental Teves AG & Co. OHG 60488 Frankfurt am Main (DE)**

(72) Erfinder:
• **JÖCKEL, Wolfgang**
  **36129 Gersfeld (DE)**
• **DIETZ, Timo**
  **65239 Hochheim am Main (DE)**
• **SCHMID, Bernhard**
  **61169 Friedberg (DE)**
• **HILSER, Roland**
  **73230 Kirchheim Teck (DE)**

(56) Entgegenhaltungen:
EP-A2- 0 059 244       DE-A1- 19 548 385
FR-A1- 2 861 458       US-A- 4 628 314
US-A- 5 019 773        US-A- 5 299 143
US-A1- 2013 035 896

**EP 3 180 625 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erzeugen einer von einer Drehzahl abhängigen Sensorinformation mit einem Drehzahlsensor, eine Steuervorrichtung zur Durchführung des Verfahrens und einen Sensor mit der Steuervorrichtung.

Aus der DE 10 2011 080 789 A1 ist ein Fahrzeug bekannt, in dem Raddrehzahlsensoren zur Erfassung der Raddrehzahl der einzelnen Räder verbaut sind. Diese Raddrehzahlsensoren sind aktive Raddrehzahlsensoren und übertragen ihre Messdaten in Form von Drehzahlpulsen über ein Kabel als Übertragungsstrecke an eine Auswerteeinrichtung.

In den Druckschriften EP 0 059 244 A2, DE 195 48 385 A1 sowie US 2013/035896 A1 sind jeweils Sensoren offenbart, welche aus einem sinusförmigen Sensorsignal eine hoch aufgelöste Winkelinformation ableiten, wobei insbesondere auch eine Normierung der Signale und eine Arkus-Sinus-Berechnung verwendet werden kann.

In Offenlegungsschrift FR 2 861 458 A1 wird vorgeschlagen, von den Übergängen zwischen den Markierungen abgeleitete normale Drehzahlpulse A, welche definierte absolute Winkellagen des Rotors repräsentieren, mit interpolierten inkrementellen Winkelinformationen I zu kombinieren, welche eine Winkellage innerhalb einer Periode des Sensorsignals wiedergeben.

Es ist Aufgabe der Erfindung, die Übertragung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Erzeugen einer von einer Drehzahl abhängigen Sensorinformation mit einem Drehzahlsensor, der eingerichtet ist, in vorbestimmten Winkellagen eines sich mit der Drehzahl drehenden physikalischen Geberfeldes Drehzahlpulse auszugeben, die Schritte:

- Erzeugen eines von der Winkellage des physikalischen Drehfeldes abhängigen digitalen Winkelsignals, und
- Ausgeben einer vorbestimmten Anzahl an höchstwertigen Bits des digitalen Winkelsignals als Sensorinformation.

Dem angegebenen Verfahren liegt die Überlegung zugrunde, dass im Rahmen der eingangs genannten Drehzahlsensoren die Drehzahlpulse basierend auf den Polen des physikalischen Geberfeldes erzeugt werden. Hierzu erfasst ein Messaufnehmer das physikalische Geberfeld und erzeugt die Drehzahlpulse, wenn das an ihm vorbeiziehende physikalische Geberfeld einen vorbestimmten Schwellwert erreicht. Da die Abstände der Pole des physikalischen Geberfeldes jedoch örtlich unveränderlich sind, kann die Drehzahl nur über den zeitlichen Abstand der Drehzahlpulse erfasst werden. Dieser zeitliche Abstand kann jedoch bei besonders geringen Drehzahlen, wie sie beispielsweise bei einem Einparkvorgang eines Fahrzeuges auftreten, sehr groß sein. Entsprechend lang steht dann aber auch keine aktuelle Drehzahl zur Verfügung, was sich dann auf die Geschwindigkeit entsprechender, von der Drehzahl abhängiger Steuer- und Regelsysteme auswirkt. Das kann insbesondere im Straßenverkehr, wie beispielsweise in dem zuvor genannten Einparkvorgang sicherheitskritisch sein.

Zur Erhöhung der Zahl der Drehzahlpulse könnte zwar die Zahl der Pole des Geberfeldes und damit der örtliche Abstand zwischen den Polen des Geberfeldes erhöht werden, im Rahmen neuerer Datenübertragungsprotokolle, wie beispielsweise dem an sich bekannten AK-Protokoll des Arbeitskreises der Automobilindustrie sollen jedoch zwischen den einzelnen Drehzahlpulsen noch andere Informationen übertragen werden, die beispielsweise zur Fehlerdiagnose herangezogen werden könnten. Wird die Zahl der Pole des Geberfeldes erhöht und damit ihr örtlicher Abstand zueinander gesenkt, könnte eigentlichen Betriebsbereich des Drehzahlsensors, das heißt bei einer Fahrt mit Normalgeschwindigkeit kein ausreichender Platz zur Verfügung stehen, die zuvor genannten anderen Informationen zwischen den Drehzahlpulsen zu übertragen. Ferner wäre insbesondere bei höheren Drehzahlen eine entsprechend hohe Bandbreite notwendig, um alle Drehzahlpulse vom Sensor zu übertragen.

Hier greift das angegebene Verfahren mit der Überlegung an, aus dem physikalischen Geberfeld keine Drehzahlpulse sondern die Winkellage des Geberfeldes in der Drehrichtung als digitales Signal zu ermitteln. Je nach geforderter Genauigkeit können von diesem digitalen Winkelsignal nach eine bestimmten Anzahl an höchstwertigen Bits die restlichen Bits abgeschnitten werden. Auf diese Weise können zwischen zwei Polen beliebig viele Drehzahlpulse generiert werden. Wird beispielsweise nur das höchstwertige Bit übertragen, dann kann wie im eingangs genannten Drehzahlsensor zwischen zwei Polen des physikalischen Geberfeldes als Sensorinformation zwischen Drehzahlpuls-ähnlichen Zuständen unterschieden werden. Werden die ersten beiden höchstwertigen Bits des digitalen Winkelsignals übertragen, dann kann zwischen zwei Polen des physikalischen Geberfeldes als Sensorinformationen schon zwischen vier Drehzahlpuls-ähnlichen Zuständen unterschieden werden. Entsprechend erhöht sich die Zahl der unterscheidbaren Drehzahlpuls-ähnlichen Zustände mit der Anzahl der höchstwertigen Bits, die vom digitalen Winkelsignal übertragen werden.

Aus der Sensorinformation könnten gemäß einer nicht erfindungsgemäßen Alternative dann wieder Drehzahlpulse, wie in dem eingangs genannten Drehzahlsensor erzeugt werden. So kann beispielsweise immer dann ein Drehzahlpuls erzeugt werden, wenn sich der digitale Zustand der Sensorinformation ändert, das heißt, wenn wenigstens eines der ausgegebenen höchstwertigen Bits seinen Wert ändert. Dies hätte den Vorteil, dass am Empfänger des vom Drehzahlsensor ausgegebenen Drehzahlsignals keine größeren technischen Änderungen zur Auswertung des Drehzahlsignals vorzunehmen wären. Der Empfänger müsste lediglich wissen, dass sich die Anzahl der Drehzahlpulse zwischen zwei Polen des physikalischen Geberfeldes erhöht hat, und er eine entsprechend niedrigere Geschwindigkeit aus dem Drehzahlsignal ableiten muss.

Gemäß der Erfindung soll der digitale Zustand der Sensorinformation in festen zeitlichen Abständen ausgegeben werden, wobei dann der Empfänger die Änderung der Sensorinformation den festen zeitlichen Abständen gegenüberstellen muss um die Drehzahlinformation zu erhalten. Dies hat den Vorteil, dass auch im Stand des sich eigentlich drehenden physikalischen Geberfeld eine eindeutig auswertbare Drehzahlinformation, das heißt eine Drehzahl von Null zur Verfügung steht. Im eingangs genannten Fall wäre nämlich unklar ob das physikalische Geberfeld steht oder ob der Drehzahlsensor kaputt wäre, wenn eine bestimmte Zeit lang keine Drehzahlinformationen zur Verfügung stehen würden.

Das Winkelsignal kann dabei beliebig erzeugt werden. Vorzugsweise jedoch umfasst der Drehzahlsensor den zuvor genannten Messaufnehmer, der eingerichtet ist, ein von der Winkellage des physikalischen Geberfeldes abhängiges Gebersignal zu erzeugen, so dass bei der Drehung des physikalischen Geberfeldes ein sinusförmiges Gebersignal entsteht. Dabei kann das digitale Winkelsignal basierend auf dem Argument des sinusförmigen Gebersignals erzeugt werden. Unter dem Argument des sinusförmigen Gebersignals soll dabei ein Signal verstanden werden, das zum sinusförmigen Gebersignal führt, wenn auf das Signal ein Sinus oder Cosinus angewendet wird. Umgekehrt heißt das, dass das Argument aus dem sinusförmigen Signal beispielsweise durch Anwenden des Arkussinus oder Arkuscosinus auf das sinusförmige Signal bestimmbar ist.

In einer Weiterbildung des angegebenen Verfahrens umfasst der Drehzahlsensor einen weiteren Messaufnehmer, der eingerichtet ist, ein von der Winkellage des physikalischen Geberfeldes abhängiges und zum Gebersignal komplementäres weiteres Gebersignal zu erzeugen. Dabei kann die Amplitude der beiden Gebersignale basierend auf dem trigonometrischen Pythagoras bestimmt, das sinusförmige Gebersignal basierend auf der bestimmten Amplitude normiert, und das Argument des sinusförmigen Gebersignals basierend auf dem normierten sinusförmigen Gebersignal bestimmt werden. Vorteil dieser Ausführung ist, dass die Amplitude des Gebersignals hier selbst im Stillstand des physikalischen Geberfeldes vorhanden ist, und so das Gebersignal sofort auf 1 normiert werden kann, um trigonometrische Umkehrfunktionen auf das Gebersignal anwenden zu können.

In einer zusätzlichen Weiterbildung umfasst das angegebene Verfahren die Schritte Bestimmen des Arguments durch Anwenden eines Arkuscosinus auf das sinusförmige Gebersignal, Ausgeben des Arguments als digitales Winkelsignal, wenn das Argument kleiner als 180° ist und Ausgeben eines um 180° beaufschlagten Arguments als digitales Winkelsignal, wenn das Argument größer als 180° ist. Zwar könnte das Argument auch mit dem Arkussinus bestimmt werden, der Cosinus ist jedoch über die ersten 180° eindeutig umkehrbar, so dass zur Bestimmung des Winkelsignals über eine volle 360°-Drehung nur eine Fallunterscheidung notwendig ist. Daher ist die Bestimmung des Arguments über den Arkuscosinus technisch am einfachsten umsetzbar.

Ob das Argument größer oder kleiner als 180° ist, kann prinzipiell beliebig, beispielsweise an der Steigung des sinusförmigen Gebersignals bestimmt werden, weil eine Cosinus-Funktion unterhalb von 180° fällt und oberhalb von 180° steigt. Am schnellsten lässt sich das Vorzeichen jedoch aus dem komplementären sinusförmigen Gebersignal ablesen, weil dies bekanntermaßen die Ableitung zum sinusförmigen Gebersignal darstellt und daher aus dem Vorzeichen unmittelbar ersichtlich ist, ob das Gebersignal steigt oder fällt. Es ist lediglich bei der Interpretation der Vorzeichen darauf zu achten, ob das komplementäre sinusförmige Gebersignal dem eigentlichen Gebersignal vorauseilt oder nacheilt.

Aus dem Winkelsignal lässt sich, insbesondere wenn es in der zuvor genannten Weise ermittelt wurde, früher und über kleiner Fahrtstrecken mit dem Fahrzeug die Drehrichtung ermitteln, denn während das Winkelsignal und damit die Sensorinformation in der einen Drehrichtung steigend ist, ist das Winkelsignal und damit die Sensorinformation in der anderen Drehrichtung fallend.

Gemäß der Erfindung soll die Sensorinformation in der zuvor beschriebenen Weise adaptiv ausgegeben werden, denn in größeren Drehzahlbereichen könnte eine hohe Anzahl von Sensorinformationen die Übertragung anderer Informationen wie beispielsweise Daten zu Fehlerzuständen, wie bereits erläutert stören. Daher soll die Sensorinformation erfindungsgemäß nur ausgegeben werden, wenn die basierend auf den Drehzahlpulsen bestimmte Drehzahl einen vorbestimmten Wert unterschreitet. Wird der vorbestimmte Wert überschritten, dann können die Drehzahlpulse in der herkömmlichen Weise ausgegeben werden.

Gemäß einem weiteren Aspekt der Erfindung umfasst ein Drehzahlsensor zum Erfassen einer Drehzahl ein Geberelement zum Abgeben eines sich mit der Drehzahl drehenden physikalischen Geberfeldes, einen gegenüber dem Geberelement stationär angeordneten Messaufnehmer zum Ausgeben eines vom physikalischen Geberfeld abhängigen Gebersignals und eine Steuervorrichtung, die zur Ausführung der erfindungsgemäßen Verfahrensschritte ausgebildet ist.

In einer besonderen Weiterbildung ist der angegebene Drehzahlsensor ein Raddrehzahlsensor.

Gemäß einem weiteren Aspekt der Erfindung umfasst ein Fahrzeug einen der angegebenen Raddrehzahlsensoren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

Fig. 1 eine schematische Ansicht eines Fahrzeuges mit einer Fahrdynamikregelung,

Fig. 2 eine schematische Ansicht eines Raddrehzahlsensors in dem Fahrzeug der Fig. 1,

Fig. 3 ein Diagramm mit einem Ausgangssignal aus zwei Messaufnehmern des Raddrehzahlsensors der Fig. 2,

Fig. 4 ein Diagramm mit einem Ausgangssignal aus dem Raddrehzahlsensor der Fig. 2,

Fig. 5 ein Diagramm mit einem Winkelsignal, das in einer Signalaufbereitungsschaltung des Raddrehzahlsensors der Fig. 2 bestimmt wird,

Fig. 6 ein Diagramm mit einem erweiterten Winkelsignal, das in einer Signalaufbereitungsschaltung des Raddrehzahlsensors der Fig. 2 bestimmt wird, und

Fig. 7 ein Diagramm mit einem alternativen Ausgangssignal aus dem Raddrehzahlsensor der Fig. 2 zeigen.

In den Figuren werden gleiche technische Elemente mit gleichen Bezugzeichen versehen und nur einmal beschrieben.

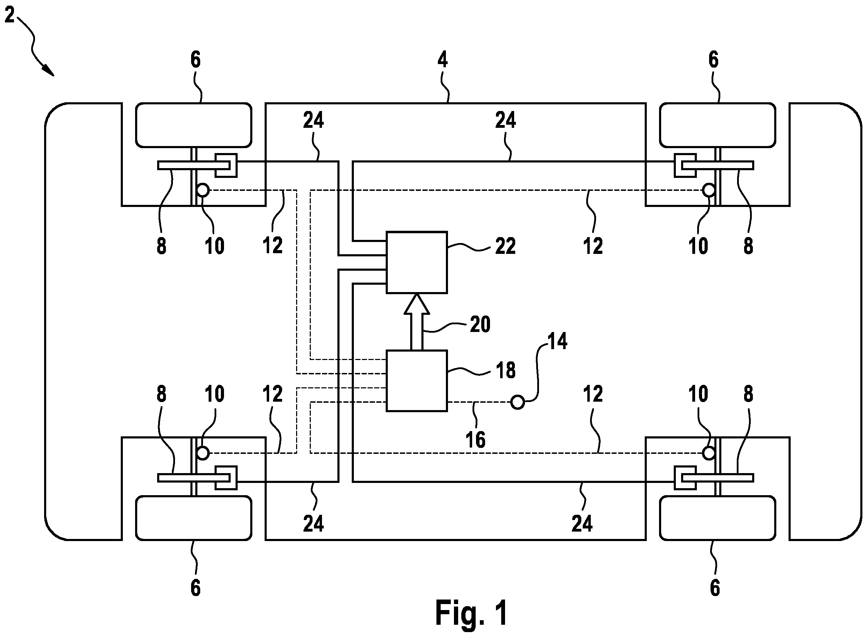

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass die Räder 6 des Fahrzeuges 2 ihre Bodenhaftung verlieren und sich das Fahrzeug 2 sogar von einer, beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamikdaten 16 des Fahrzeuges 2 erfasst, die beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben umfassen können.

Basierend auf den erfassten Drehzahlen 12 und Fahrdynamikdaten 16 kann eine Auswertevorrichtung in Form eines Reglers 18 in einer dem Fachmann bekannten Weise bestimmen, ob das Fahrzeug 2 auf der Fahrbahn rutscht oder sogar von der oben genannten vorgegebenen Trajektorie abweicht und entsprechend mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Neben der Verwendung der Drehzahlen 12 der einzelnen Drehzahlsensoren 10 in einer zuvor beschriebenen Fahrdynamikregelung, werden die Drehzahlen 12 auch für andere Anwendungen eingesetzt. Eine dieser Anwendungen ist beispielsweise die Bestimmung der Übergrundgeschwindigkeit des Fahrzeuges 2. Diese kann dann dem Fahrer angezeigt oder zu regelungstechnischen Zwecken, beispielsweise beim automatischen Einparken des Fahrzeuges 2 in eine Parklücke verwendet werden.

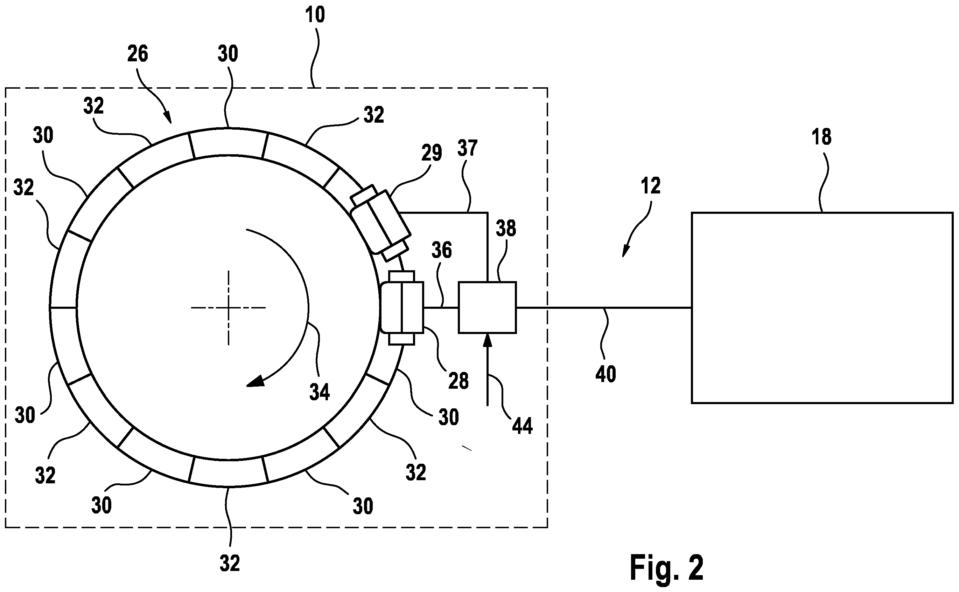

Es wird auf Fig. 2 Bezug genommen, die eine schematische Ansicht einer der Drehzahlsensoren 10 in der Fahrdynamikregelung der Fig. 1 zeigt.

Der Drehzahlsensor 10 ist in der vorliegenden Ausführung als aktiver Drehzahlsensor ausgeführt, der eine drehfest am Rad 6 befestigte Encoderssscheibe 26 und zwei ortsfest zum Chassis 4 befestige Messaufnehmer in Form eines ersten Lesekopfes 28 und eines dazu lageversetzten zweiten Lesekopfes 29 umfasst.

Die Encoderscheibe 26 besteht in der vorliegenden Ausführung aus aneinandergereihten Magnetnordpolen 30 und Magnetsüdpolen 32, die gemeinsam ein nicht weiter dargestelltes Gebermagnetfeld erregen. Dreht sich die am Rad 6 befestigte Encoderscheibe 26 mit diesem in eine Drehrichtung 34, dreht sich das Gebermagnetfeld so mit.

Die Leseköpfe 28, 29 können im Rahmen der Barberpol-Technik aufgebaute magnetostriktive Elemente umfassen, die in Abhängigkeit der Winkellage des von der Encoderscheibe 26 erregten Gebermagnetfeldes linear ihren elektrischen Widerstand ändert. Details hierzu können beispielsweise der Druckschrift WO 2007 014 947 A1 entnommen werden und werden deshalb nicht weiter erläutert.

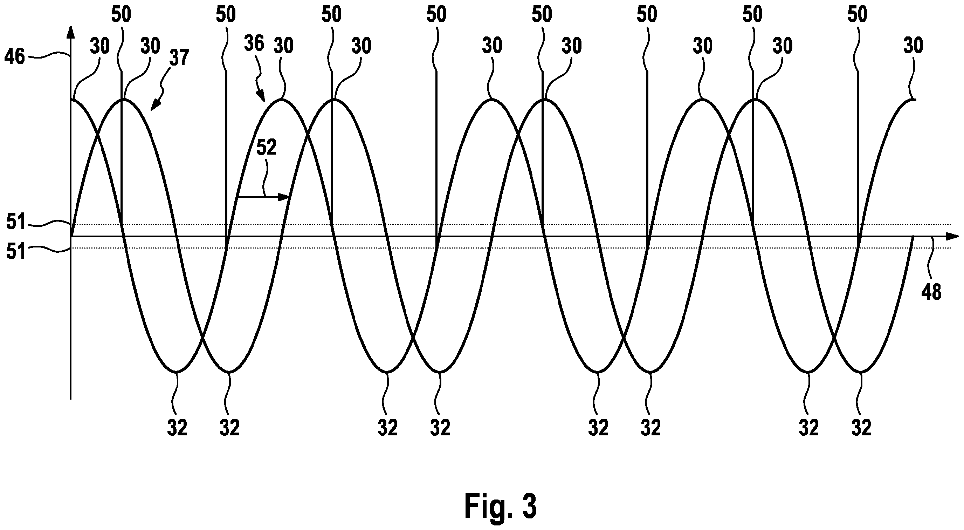

Zur Erfassung der Drehzahl 12 wird die Änderung der Winkellage der Encoderscheibe 26 und damit die Änderung der elektrischen Widerstände der Leseköpfe 28, 29 erfasst. Dazu können die Leseköpfe 28, 29 in an sich bekannter Weise nicht weiter dargestellte Widerstandsmessschaltung, wie beispielsweise eine an sich bekannte Brückenschaltung umfassen, an die entsprechend die magnetostriktiven Elemente angeschlossen sind. In Abhängigkeit der elektrischen Widerstände der magnetostriktiven Elemente der Leseköpfe 28, 29 wird in der Widerstandsmessschaltung für jeden Lesekopf 28, 29 ein periodisches Ausgangssignal, nachstehend Drehzahlgebersignal 36, 37 genannt, erzeugt. Basierend auf dem Drehzahlgebersignal 36, 37, kann in einer noch zu beschreibenden Weise in einer den Leseköpfen 28, 29 nachgelagerten Signalaufbereitungsschaltung 38, ein von der Drehzahl 12 abhängiges und in Fig. 3 gezeigtes Pulssignal 40 erzeugt und an den Regler 18 ausgegeben werden. Hierzu und zu weiteren Hintergrundinformationen zu aktiven Raddrehzahlsensoren wird auf den einschlägigen Stand der Technik, wie beispielsweise die DE 101 46 949 A1 verwiesen.

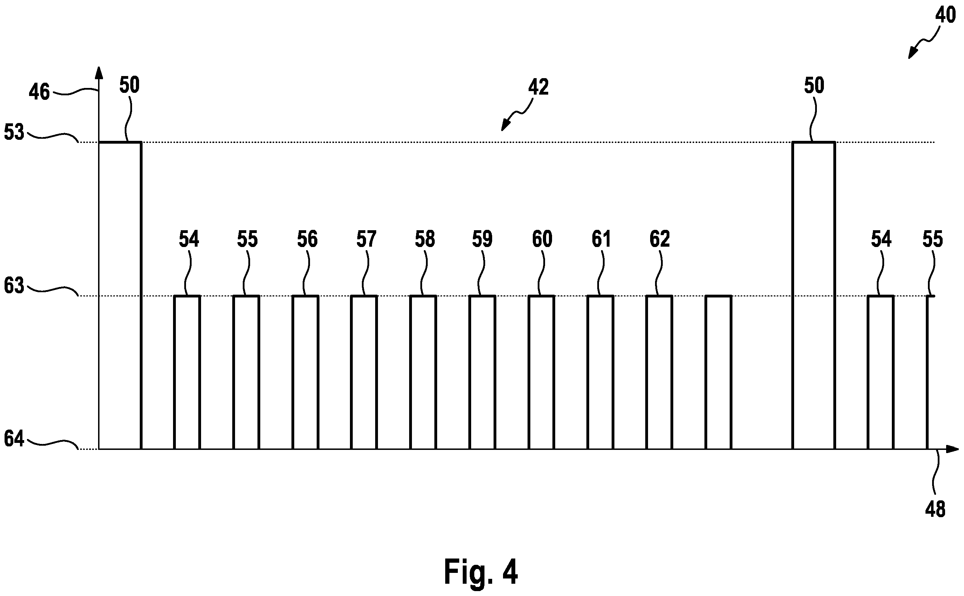

In der vorliegenden Ausführung kann in das Pulssignal 40 als Datenübertragungssignal neben den Informationen über die Drehzahl 12 auch eine in Fig. 4 gezeigte Zustandsinformation 42 eingetragen werden, mit der nähere Informationen zur Drehzahl 12 übertragen werden kann. Diese Zustandsinformation 42 kann beispielsweise die Drehrichtung des Rades 6 sein, zu dem die Drehzahl 12 erfasst wird und in der Signalaufbereitungsschaltung 38 bestimmt werden.

Es wird auf Fig. 3 Bezug genommen, in der die Drehzahlgebersignale 36, 37 in Form von Signalwerten 46 über die Zeit 48 dargestellt ist. In der Regel sind diese Signalwerte Spannungswerte.

Am Beispiel des ersten Drehzahlgebersignals 36 ist der Verlauf des elektrischen Widerstandes der oben genannten magnetostriktiven Elemente gut erkennbar. In jedem Maximum des ersten Drehzahlgebersignals 36 befindet sich axial unter dem ersten Lesekopf 28 ein Magnetnordpol 30 der Encoderscheibe 26, während sich in jedem Minimum des ersten Drehzahlgebersignals 36 axial unterhalb des ersten Lesekopfes 28 ein Magnetsüdpol 32 der Encoderscheibe 26 befindet. Dreht sich die Encoderscheibe 26 schwingt das erste Drehzahlgebersignal 36 zwischen den beiden Extremwerten.

Das zweite Drehzahlgebersignal 37 ist genauso wie das erste Drehzahlgebersignal 36 aufgebaut. Da jedoch der zweite Lesekopf 29 in Drehrichtung 34 der Encoderscheibe 26 gesehen versetzt zum ersten Lesekopf 28 angeordnet ist, erreichen die Magnetpole 30, 32 den zweiten Lesekopf 29 je nach Drehrichtung 34 der Encoderrscheibe 26 zeitlich vor oder nach dem ersten Lesekopf 28. Deshalb eilt das zweite Drehzahlgebersignal 37 dem ersten Drehzahlgebersignal 36 entweder vor oder nach.

Zur Erfassung der Drehzahl 12 können die Anzahl der Schwingungen wenigstens eines der beiden Drehzahlgebersignale 36, 37 während einer vorbestimmten Zeitdauer gezählt werden, denn je höher die Drehzahl 12 ist, desto mehr Schwingungen werden in dieser vorbestimmten Zeitdauer generiert.

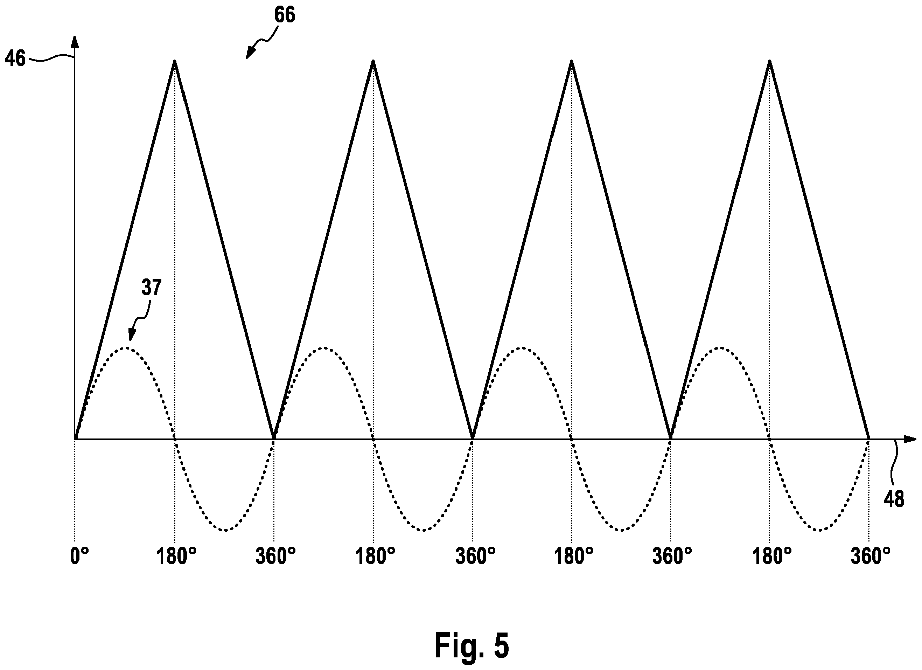

Um den Datenübertragungsaufwand zwischen dem Drehzahlsensor 10 und der die Drehzahl empfangenden Einrichtung, wie beispielsweise dem Regler 18, zu erleichtern, werden nicht die datenintensiven Drehzahlgebersignale 36, 37 sondern nur das Pulssignal 40 übertragen, das in Fig. 4 und 5 gezeigte Pulse 50, nachstehend Geschwindigkeitspulse 50 genannt, umfasst. Jeder Geschwindigkeitspuls 50 zeigt daher das Auftreten einer Schwingung oder gegebenenfalls einer Halbschwingung. Zur Erzeugung der Geschwindigkeitspulse 50 können Schwellen 51 eingeführt werden. Prinzipiell reicht eine einzige Schwelle 51 aus, die auf einen Signalwert 46 von Null gelegt werden kann. Durchtritt beispielsweise das erste Drehzahlgebersignal 36 die Schwelle 51 von Null, dann kann ein Geschwindigkeitspuls 50 erzeugt werden.

Da die Leseköpfe 28, 29 jedoch in Barberpole-Technik aufgebaut sind, besteht aus in der WO 2007 014 947 A1 genannten Gründen die Gefahr, dass die Drehzahlgebersignale 36, 37 mit zusätzlichen Schwingungen kleiner Amplitude überlagert werden, was unter dem Fachbegriff Flippen bekannt ist. Diese würden die Frequenz der Drehzahlgebersignale 36, 37 und damit die zu messende Drehzahl 12 verdoppeln. Um dies auszuschließen, werden im Rahmen der vorliegenden Ausführung oberhalb und unterhalb des Signalwertes 46 von Null je eine in Fig. 4 gezeigte Schwelle 51 eingeführt, wobei ein Geschwindigkeitspuls 50 erzeugt wird, wenn das erste Drehzahlgebersignal 36 die obere Schwelle 51 von oben nach unten schneidet und die untere Schwelle 51 von unten nach oben schneidet.

Zusätzlich kann aus den zuvor genannten Gründen aus dem Vorzeichen des Phasenversatzes 52 zwischen dem ersten und zweiten Drehzahlgebersignal 36, 37 die Drehrichtung 34 der Encoderscheibe 26 und damit der Drehzahl 12 abgeleitet werden.

Es wird auf Fig. 4 Bezug genommen, in der das Pulssignal 40 wieder in Form von Signalwerten 46 über die Zeit 48 dargestellt ist. In der Regel sind diese Signalwerte Stromwerte.

Das Pulssignal 40 trägt die Geschwindigkeitspulse 50 mit einem ersten Pulslevel 53, der nachstehend High-Pulslevel 53 genannt wird. Diese Geschwindigkeitspulse 50 werden mit höchster Priorität an die übergeordnete Einrichtung, wie den Regler 18 übertragen, was heißt, dass bei der anstehenden Übertragung eines Geschwindigkeitspulses 50 die Übertragung aller anderen Informationen zurückgestellt oder abgebrochen wird.

Neben den Geschwindigkeitspulsen 50 wird in das Pulssignal 40 auch die oben genannte Zustandsinformation 42 mit mindestens einem weiteren Informationspuls 54 bis 62 eingetragen, der abhängig von der zu übertragenden Information beispielsweise ein zweites Puls-Level 63, das nachstehend Medium-Pulslevel 63 genannt wird, oder ein drittes Pulslevel 64, das nachstehend Low-Pulslevel 64 genannt wird, aufweisen kann. In der Fig. 3 sind der Übersichtlichkeit halber alle Informationspulse 54 bis 62 mit dem Medium-Pulslevel 63 dargestellt. In der vorliegenden Ausführung werden in das Pulssignal 40 nach dem Geschwindigkeitspuls 50 neun Informationspulse 54 bis 62 eingetragen, die Informationen basierend auf dem an sich bekannten AK-Protokoll des Arbeitskreises der Automobilindustrie tragen. Jeder Informationspuls 54 bis 62 trägt dabei ein Bit #0 bis #8. Wird ein Informationspuls 54 bis 62 mit dem Medium-Pulslevel 63 übertragen, ist sein entsprechendes Bit #0 bis #8 auf 1 gesetzt. Wird ein Informationspuls 54 bis 64 mit dem Low-Pulslevel 64 übertragen, so ist sein entsprechendes Bit #0 bis #8 auf 0 gesetzt. Das AK-Protokoll wurde herkömmlich bereits zur Überwachung eines in Fig. 2 nicht weiter sichtbaren Luftspaltes zwischen der Encoderscheibe 26 und den Leseköpfen 28, 29 verwendet, wobei die einzelnen Informationspulse 54 bis 62 nachstehend in der folgenden Weise belegt wurden:

| Bit | Puls | Abkürzung | Beschreibung | Kodierung |
|-----|------|-----------|--------------|-----------|
| #0 | 54 | LR | Luftspaltreserve | '0' = in Ordnung '1' = schlecht |
| #1 | 55 | | | |
| #2 | 56 | | | |
| #3 | 57 | GDR | Gültigkeit der Drehrichtungsinfo | '0' = ungültig '1' = gültig |
| #4 | 58 | DR | Drehrichtung 34 | '0' = positiv '1' = negativ |
| #5 | 59 | | | |
| #6 | 60 | | | |
| #7 | 61 | | | |
| #8 | 62 | P | Parität | |

Wie dabei beispielhaft die Drehrichtung 34 für das Bit #4 bestimmt wird, wurde bereits weiter oben erläutert.

Den dem Drehzahlsensor 10 nachgelagerten Einrichtungen, wie beispielsweise dem Regler 18 stehen so anhand der Zustandsinformation 42 nähere Informationen zur Drehzahl 12 und deren Bestimmung, wie beispielsweise die Drehrichtung 34 zur Verfügung.

Problematisch an der zuvor genannten Übertragung der Drehzahl 12 mit dem Pulssignal 40 ist jedoch, dass bei sehr niedrigen Drehzahlen 12, wie sie beispielsweise beim Einparken des Fahrzeuges 2 vorkommen, nur ungenügend Geschwindigkeitspulse 50 zum Regler 18 übertragen werden, weil aufgrund der langsamen Drehung der Encoderscheibe 26 über einen vergleichsweise großen Zeitraum keine Geschwindigkeitspulse 50 erzeugt und versendet werden. In diesem Zeitraum steht dann auch keine aktuelle Drehzahl 12 zur Verfügung. Dies kann gerade bei Einparkassistenten oder ähnlichen Anwendungen zu nicht hinnehmbaren Totzeiten führen.

Aus diesem Grund wird im Rahmen der vorliegenden Ausführung vorgeschlagen, unterhalb einer bestimmten Geschwindigkeitsschwelle die Generierung und Übertragung der Informationen zur Drehzahl 12 adaptiv zu ändern. Die Entscheidung, welches Verfahren zur Generierung und Übertragung der Drehzahl 12 verwendet wird, könnte die Signalaufbereitungsschaltung 38 beispielsweis basierend auf der Geschwindigkeit des Fahrzeuges 2 treffen. Auch das geänderte Verfahren selbst kann beispielsweise von der Signalaufbereitungsschaltung 38 durchgeführt werden und soll nachstehend anhand der Fig. 5 bis 7 näher erläutert werden.

Um das geänderte Verfahren besonders vorteilhaft durchzuführen, sind die beiden Leseköpfe 28, 29 derart angeordnet, dass die beiden Drehzahlgebersignale 36, 37 zueinander komplementär sind, das heißt, dass sie zueinander einen Phasenversatz von 90° aufweisen.

Dann kann zunächst von den beiden Drehzahlgebersignalen 36, 37 basierend auf dem trigonometrischen Pythagoras die Amplitude A bestimmt werden. Wenn ein Signalwert 46 des ersten Drehzahlgebersignals 36 mit X und ein Signalwert 46 des zweiten Drehzahlgebersignals 37 mit Y bezeichnet wird, dann lässt sich die Amplitude im Rahmen des trigonometrischen Pythagoras wie folgt berechnen:

$$A = \sqrt{X^2 + Y^2}$$

Ist die Amplitude A bekannt, lassen sich beide Drehzahlgebersignale 36, 37 auf 1 normieren. Zur verständlicheren Darstellung der nachstehenden Ausführungen kann das erste Drehzahlgebersignal 36, das dem zweiten Drehzahlgebersignal 37 in der in Fig. 3 gezeigten Weise vorauseilt, wie ein Cosinussignal und das zweite Drehzahlgebersignal 37 wie ein Sinussignal behandelt werden. Im Rahmen des geänderten Verfahrens zur Generierung und Übertragung der Information über die Drehzahl 12 wird nun auf das erste Drehzahlgebersignal 36 ein Arkuscosinus angewendet. Gegenüber dem Arkussinus hat der Arkuscosinus den Vorteil, dass er über die ersten 180° eineindeutig ist und damit weniger Fallunterscheidungen notwendig macht. Das Ergebnis ist ein Zwischensignal 66, dessen Signalwerte 46 in Fig. 5 über die Zeit 48 dargestellt sind.

Die Signalwerte 46 des Zwischensignals 66 verlaufen im Gegensatz zum ersten Drehzahlgebersignal 36 über die Zeit 48 linear. Zudem lässt sich aus dem Zwischensignal 66 prinzipiell auch die Winkellage der Encoderscheibe 26 erkennen. Dazu muss jedoch die Änderung des Zwischensignals 66 über die Zeit 48 betrachtet werden, denn steigt das Zwischensignal 66, dann liegt die Stellung der Encoderscheibe 26 zwischen 0° und 180° und fällt das Zwischensignal 66, dann liegt die Stellung der Encoderscheibe 26 zwischen 180° und 360°. Problematisch ist jedoch, dass die Information für die Drehzahl 12 in einem Zustand des Fahrzeuges 2 bestimmt werden soll, in dem sich die Drehzahl 12 und damit auch das Zwischensignal 66 über die Zeit 48 kaum ändert. Damit muss die Stellung der Encoderscheibe 26 auch dann erkennbar sein, wenn für das Zwischensignal 66 nur ein Signalwert 46 zur Verfügung steht, weil es sich über die Zeit nicht ändert.

Hierzu kann in besonders günstiger Weise das zum ersten Drehzahlgebersignal 36 komplementäre zweite Drehzahlgebersignal 37 verwendet werden, weil es in an sich bekannter Weise für die Signalwerte 46 des ersten Drehzahlgebersignals 36 den Differenzialquotienten und damit die Änderung des ersten Drehzahlsignals 36 über die Zeit 48 darstellt. Werden die beiden Drehzahlgebersignale 36, 37 in der oben genannten Weise wie Cosinus und Sinus zueinander betrachtet, dann steigt das Zwischensignal 66, wenn das zweite Drehzahlgebersignal 37 positiv ist und fällt, wenn das zweite Drehzahlgebersignal 37 negativ ist. Um dies zu verdeutlichen, ist das zweite Drehzahlgebersignal 37 in Fig. 5 der Übersichtlichkeit halber noch einmal gepunktet angedeutet.

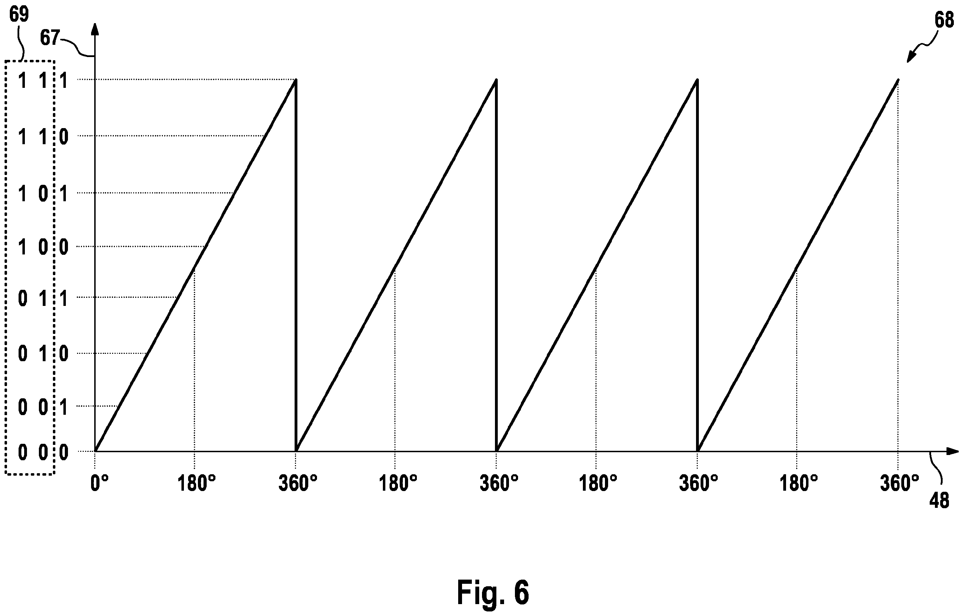

Weil die Stellung der Encoderscheibe 26 nun auch bestimmt werden kann, wenn sich das erste Drehzahlgebersignal 36 nicht über die Zeit ändert, kann ein Winkelsignal 68 erzeugt werden, aus dem unmittelbar die Stellung der Encoderscheibe 26 über die Zeit 48 erkennbar ist. Dazu wird das Zwischensignal 66 unmittelbar als Winkelsignal 68 ausgegeben, wenn das zweite Drehzahlgebersignal 37 positiv ist. Wenn das zweite Drehzahlgebersignal 37 negativ ist, kann als Winkelsignal 68 ein Wert von 360° minus der Signalwert 46 des Zwischensignals 66 ausgegeben werden. Das Winkelsignal 68 soll dabei als in Fig. 6 angedeutetes digitales Signal vorliegen, das über die Zeit 48 durch Digitalwerte 67 beschrieben wird. In Fig. 6 ist dabei die Achse mit den Digitalwerten 67 nur mit 3-Bit-wertigen Zwischenwerten beschriftet, während das digitale Winkelsignal 66 selbstverständlich weitaus höher aufgelöst sein kann.

Um nun aus diesem digitalen Winkelsignal 68 die oben genannte Information über die Drehzahl 12 zu erzeugen, werden von den Digitalwerten 67 des Winkelsignals 68 die höchstwertigen Bits, die in Fig. 6 gepunktet umrandet und mit dem Bezugszeichen 69 angedeutet sind, als Information über die Drehzahl 12 in dem Pulssignal 40 herausgeschnitten.

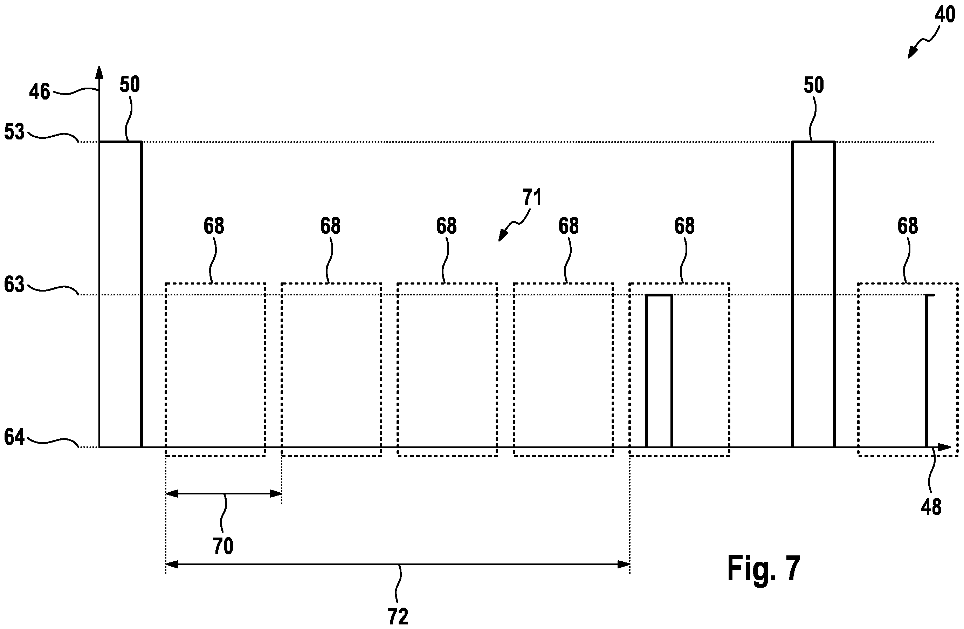

Diese höchstwertigen Bits 69 können dann im Pulssignal 40 in beliebiger Weise übertragen werden. Ein Beispiel hierzu ist in Fig. 7 angedeutet.

Hierbei werden erfindungsgemäß die höchstwertigen Bits 69 eines aktuellen digitalen Wertes 67 des Winkelsignals 68 in regelmäßigen Zeitabständen 70 zwischen den eigentlichen Drehzahlpulsen 50 statt der oder zusätzlich zur Zustandsinformation 42 als Sensorinformation 71 übertragen. Im Rahmen der Fig. 7 wird die Sensorinformation 71 statt der Zustandsinformation 42 übertragen. Der Empfänger dieser Informationen über die Drehzahl 12, also der Regler 18, kann sich aus den bekannten Zeitabständen 70 die Gesamtzeit 72 zwischen einem Zustandswechsel der höchstwertigen Bits 69 des Winkelsignals 68 und damit die Drehzahl 12 ableiten.

Die in der zuvor beschriebenen Weise generierte und im Pulssignal 40 übertragene Information über die Drehzahl 12 erlaubt es dem Empfänger der Information über die Drehzahl 12 auch aus dem Zustandswechsel der höchstwertigen Bits 69 im Pulssignal 40 unmittelbar die Drehrichtung 34 der Encoderscheibe 26 erkennen, denn durch einen Anstieg oder einen Abfall der mit den höchstwertigen Bits 69 beschriebenen digitalen Werte 67 des Winkelsignals 68 lässt sich auch eindeutig die Drehrichtung 34 der Encoderscheibe 34 unterscheiden.

**Patentansprüche**

**1.** Verfahren zum Erzeugen einer von einer Drehzahl (12) abhängigen Sensorinformation (71) mit einem Drehzahlsensor (12), der eingerichtet ist, in vorbestimmten Winkellagen (51) eines sich mit der Drehzahl drehenden physikalischen Geberfeldes (30, 32) Drehzahlpulse (50) auszugeben, umfassend:

- Erzeugen eines von der Winkellage des physikalischen Geberfeldes (30, 32) abhängigen digitalen Winkelsignals (68), und
- Ausgeben einer vorbestimmten Anzahl an höchstwertigen Bits (68) des digitalen Winkelsignals (68) als Sensorinformation (71),
wenn die basierend auf den Drehzahlpulsen (50) bestimmte Drehzahl (12) einen vorbestimmten Wert unterschreitet,
wobei die höchstwertigen Bits (69) eines aktuellen digitalen Wertes (67) des Winkelsignals (68) in regelmäßigen Zeitabständen (70) zwischen den eigentlichen Drehzahlpulsen (50) statt der oder zusätzlich einer Zustandsinformation (42) als Sensorinformation (71) übertragen werden.

2. Verfahren nach Anspruch 1, wobei der Drehzahlsensor (12) einen weiteren Messaufnehmer (29) umfasst, der eingerichtet ist, ein von der Winkellage des physikalischen Geberfeldes (30, 32) abhängiges und zum Gebersignal (36) komplementäres weiteres Gebersignal (37) zu erzeugen, so dass bei der Drehung des physikalischen Geberfeldes (30, 32) das Gebersignal (36) sinusförmig erzeugt wird, umfassend:

- Bestimmen der Amplitude (A) der beiden Gebersignale (36, 37) basierend auf dem trigonometrischen Pythagoras,
- Normieren des sinusförmigen Gebersignals (36) basierend auf der bestimmten Amplitude (A), und
- Erzeugen des von der Winkellage des physikalischen Geberfeldes abhängigen digitalen Winkelsignals basierend auf dem normierten sinusförmigen Gebersignal (36).

3. Verfahren nach Anspruch 2, umfassend:

- Bestimmen des Arguments durch Anwenden eines Arkuscosinus auf das sinusförmige Gebersignal (36),
- Ausgeben des Arguments als digitales Winkelsignal (68), wenn das Argument kleiner als 180° ist, und
- Ausgeben eines um 180° beaufschlagten Arguments als digitales Winkelsignal (68), wenn das Argument größer als 180° ist.

4. Verfahren nach Anspruch 3, wobei am Vorzeichen des komplementären Gebersignals (37) unterschieden wird, ob das Argument kleiner oder größer als 180° ist.

5. Verfahren nach einem der vorstehenden Ansprüche, umfassend:

- Bestimmen der Drehrichtung (34) des sich mit der Drehzahl (12) drehenden physikalischen Geberfeldes (30, 32) basierend auf der Steigung des Winkelsignals (68).

6. Drehzahlsensor (10), insbesondere Raddrehzahlsensor, zum Erfassen einer Drehzahl (12), umfassend:

- ein Geberelement (26) zum Abgeben eines sich mit der Drehzahl (12) drehenden physikalischen Geberfeldes (30, 32);
- ein gegenüber dem Geberelement (26) stationär angeordneter Messaufnehmer (28) zum Ausgeben eines vom physikalischen Geberfeld (30, 32) abhängigen Gebersignals (36); und
- eine Steuervorrichtung (38) des Drehzahlsensor, welche zum Erzeugen einer von einer Drehzahl (12) abhängigen Sensorinformation (71) eingerichtet ist und wobei der Drehzahlsensor (12) so eingerichtet ist, in vorbestimmten Winkellagen (51) eines sich mit der Drehzahl drehenden physikalischen Geberfeldes (30, 32) Drehzahlpulse (50) auszugeben, und wobei der Drehzahlsensor (10) zur Ausführung der folgenden Verfahrensschritte ausgebildet ist:
- Erzeugen eines von der Winkellage des physikalischen Geberfeldes (30, 32) abhängigen digitalen Winkelsignals (68), und
- Ausgeben einer vorbestimmten Anzahl an höchstwertigen Bits (68) des digitalen Winkelsignals (68) als Sensorinformation (71),
wenn die basierend auf den Drehzahlpulsen (50) bestimmte Drehzahl (12) einen vorbestimmten Wert unterschreitet, wobei die höchstwertigen Bits (69) eines aktuellen digitalen Wertes (67) des Winkelsignals (68) in regelmäßigen Zeitabständen (70) zwischen den eigentlichen Drehzahlpulsen (50) statt der oder zusätzlich einer Zustandsinformation (42) als Sensorinformation (71) übertragen werden.

**Claims**

1. Method for generating an item of sensor information (71) dependent on a speed (12) using a speed sensor (12) which is configured to output speed pulses (50) at predetermined angular positions (51) of a physical encoder field (30, 32) rotating at the speed, comprising:

   - generating a digital angle signal (68) dependent on the angular position of the physical encoder field (30, 32), and
   - outputting a predetermined number of most significant bits (68) of the digital angle signal (68) as sensor information (71),
   if the speed (12) determined on the basis of the speed pulses (50) undershoots a predetermined value,
   wherein the most significant bits (69) of a current digital value (67) of the angle signal (68) are transmitted at regular intervals of time (70) between the actual speed pulses (50) instead of or in addition to an item of state information (42) as sensor information (71) .

2. Method according to Claim 1, wherein the speed sensor (12) comprises a further measuring sensor (29) which is configured to generate a further encoder signal (37) which is dependent on the angular position of the physical encoder field (30, 32) and is complementary to the encoder signal (36), with the result that the encoder signal (36) is generated in a sinusoidal form when the physical encoder field (30, 32) rotates, comprising:

   - determining the amplitude (A) of the two encoder signals (36, 37) on the basis of the trigonometric Pythagoras theorem,
   - normalizing the sinusoidal encoder signal (36) on the basis of the determined amplitude (A), and
   - generating the digital angle signal dependent on the angular position of the physical encoder field on the basis of the normalized sinusoidal encoder signal (36).

3. Method according to Claim 2, comprising:

   - determining the argument by applying an arc cosine to the sinusoidal encoder signal (36),
   - outputting the argument as a digital angle signal (68) if the argument is less than 180°, and
   - outputting an argument, to which 180° have been applied, as the digital angle signal (68) if the argument is greater than 180°.

4. Method according to Claim 3, wherein the sign of the complementary encoder signal (37) is used to distinguish whether the argument is less than or greater than 180°.

5. Method according to one of the preceding claims, comprising:

   - determining the direction of rotation (34) of the physical encoder field (30, 32) rotating at the speed (12) on the basis of the slope of angle signal (68).

6. Speed sensor (10), in particular wheel speed sensor, for capturing a speed (12), comprising:

   - an encoder element (26) for emitting a physical encoder field (30, 32) rotating at the speed (12);
   - a measuring sensor (28) which is arranged in a stationary manner with respect to the encoder element (26) and is intended to output an encoder signal (36) dependent on the physical encoder field (30, 32); and
   - a control apparatus (38) of the speed sensor which is configured to generate an item of sensor information (71) dependent on a speed (12), and wherein the speed sensor (12) is configured to output speed pulses (50) at predetermined angular positions (51) of a physical encoder field (30, 32) rotating at the speed, and wherein the speed sensor (10) is designed to carry out the following method steps:
   - generating a digital angle signal (68) dependent on the angular position of the physical encoder field (30, 32), and
   - outputting a predetermined number of most significant bits (68) of the digital angle signal (68) as sensor information (71),
   if the speed (12) determined on the basis of the speed pulses (50) undershoots a predetermined value,
   wherein the most significant bits (69) of a current digital value (67) of the angle signal (68) are transmitted at regular intervals of time (70) between the actual speed pulses (50) instead of or in addition to an item of state information (42) as sensor information (71) .

# EP 3 180 625 B1

**Revendications**

1. Procédé permettant de générer une information de capteur (71) en fonction d'une vitesse de rotation (12) par un capteur de vitesse de rotation (12) aménagé pour émettre des impulsions de vitesse de rotation (50) dans des positions angulaires prédéterminées (51) d'un champ de transmetteur physique (30, 32) tournant à la vitesse de rotation, comprenant les étapes consistant à :

   - générer un signal angulaire numérique (68) en fonction de la position angulaire du champ de transmetteur physique (30, 32), et
   - émettre comme information de capteur (71) un nombre prédéterminé de bits de poids fort (68) du signal angulaire numérique (68), si la vitesse de rotation (12) déterminée sur la base des impulsions de vitesse de rotation (50) soupasse une valeur prédéterminée, les bits de poids fort (69) d'une valeur numérique actuelle (67) du signal angulaire (68) étant transmis comme information de capteur (71) à intervalles de temps réguliers (70) entre les impulsions de vitesse de rotation proprement dites (50) au lieu ou en plus d'une information d'état (42).

2. Procédé selon la revendication 1, dans lequel le capteur de vitesse de rotation (12) comprend un élément capteur supplémentaire (29) aménagé pour générer un signal de transmetteur supplémentaire (37) en fonction de la position angulaire du champ de transmetteur physique (30, 32), complémentaire au signal de transmetteur (36), de sorte qu'en cas de rotation du champ de transmetteur physique (30, 32), le signal de transmetteur (36) est généré de manière sinusoïdale, comprenant les étapes consistant à :

   - déterminer l'amplitude (A) des deux signaux de transmetteur (36, 37) sur la base de l'identité trigonométrique pythagoricienne,
   - normaliser le signal de transmetteur sinusoïdal (36) sur la base de l'amplitude déterminée (A), et
   - générer le signal angulaire numérique en fonction de la position angulaire du champ de transmetteur physique sur la base du signal de transmetteur sinusoïdal normalisé (36).

3. Procédé selon la revendication 2, comprenant les étapes consistant à :

   - déterminer l'argument par l'application d'un arc cosinus au signal de transmetteur sinusoïdal (36),
   - émettre l'argument sous forme de signal angulaire numérique (68) si l'argument est inférieur à 180°, et
   - émettre un argument appliqué de 180° sous forme de signal angulaire numérique (68) si l'argument est supérieur à 180°.

4. Procédé selon la revendication 3, dans lequel le signe du signal de transmetteur complémentaire (37) permet de distinguer si l'argument est inférieur ou supérieur à 180°.

5. Procédé selon l'une quelconque des revendications précédentes, comprenant les étapes consistant à :

   - déterminer le sens de rotation (34) du champ de transmetteur physique (30, 32) tournant à la vitesse de rotation (12) sur la base de la pente du signal angulaire (68).

6. Capteur de vitesse de rotation (10), en particulier capteur de vitesse de rotation de roue, destiné à détecter une vitesse de rotation (12), comprenant :

   - un élément transmetteur (26) pour délivrer un champ de transmetteur physique (30, 32) tournant à la vitesse de rotation (12) ;
   - un élément capteur (28) disposé de manière stationnaire à l'opposé de l'élément transmetteur (26) pour émettre un signal de transmetteur (36) en fonction du champ de transmetteur physique (30, 32) ; et
   - un dispositif de commande (38) du capteur de vitesse de rotation (12), aménagé pour générer une information de capteur (71) en fonction d'une vitesse de rotation, et dans lequel le capteur de vitesse de rotation (12) est aménagé de façon à émettre des impulsions de vitesse de rotation (50) dans des positions angulaires prédéterminées (51) d'un champ de transmetteur physique (30, 32) tournant à la vitesse de rotation, et le capteur de vitesse de rotation (10) étant réalisé pour exécuter les étapes de procédé suivantes consistant à :
   - générer un signal angulaire numérique (68) en fonction de la position angulaire du champ de transmetteur physique (30, 32), et
   - émettre comme information de capteur (71) un nombre prédéterminé de bits de poids fort (68) du signal angulaire numérique (68), si la vitesse de rotation (12) déterminée sur la base des impulsions de vitesse de rotation (50) soupasse une valeur prédéterminée, les bits de poids fort (69) d'une valeur numérique actuelle (67) du signal angulaire (68) étant transmis comme information de capteur (71) à intervalles de temps réguliers (70) entre les impulsions de vitesse de rotation proprement dites (50) au lieu ou en plus d'une information d'état (42).

**Fig. 1**

Fig. 2

Fig. 3

**Fig. 4**

EP 3 180 625 B1

Fig. 5

**Fig. 6**

EP 3 180 625 B1

Fig. 7

EP 3 180 625 B1

**EP 3 180 625 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011080789 A1
- EP 0059244 A2
- DE 19548385 A1
- US 2013035896 A1
- FR 2861458 A1
- WO 2007014947 A1
- DE 10146949 A1